# EUROPEAN PATENT APPLICATION

(11) **EP 2 464 031 A1**
(43) Date of publication of application: **13.06.2012**
(21) Application number: 11153980.5
(22) Date of filing: 10.02.2011
(51) Int. Cl.: H04B 7/185

(54) **Satellite communication system with sub-distribution architecture**

(30) Priority: 08.12.2010 EP 10194188
(71) Applicant: SES Astra S.A., 6815 Betzdorf (LU)
(72) Inventor: Biewer, Patrick, 6815, Betzdorf (LU); Lattanzi, Fabio, 6815, Betzdorf (LU); Bove, Antonio, 6815, Betzdorf (LU); Kierspel, Ralf, 6815, Betzdorf (LU)
(74) Representative: HOFFMANN EITLE

(57) **Abstract**

A communication system (10) includes a backbone-side transceiving device (12) connected to a terrestrial backbone (14), a remote transceiving device (16) connected to a set of subscriber communication devices (20) of a plurality of subscribers, and a satellite (18) to communicate with the backbone-side transceiving device (12) and a remote transceiving device (16). Data is transferred between the terrestrial backbone (14) and the set of subscriber communication devices (20) through the backbone transceiving device (12), the satellite (18), and the remote transceiving device (16). Both the backbone-side transceiving device (12) and the remote transceiving device (16) are configured for enforcing rules, on a per subscriber basis, on the traffic at these devices (12, 16). The invention also relates to communication devices, methods and computer programs used in the context of such a communication architecture.

## Description

### [Technical Field]

The present invention relates to satellite and network communications, and notably to communication architectures providing access to the Internet (or the like) for end users. Communication systems, communication devices, methods carried out by a communication system, and computer programs are here described in this context.

### [Background]

There is a need for providing a solution to bridge the so-called digital divide still existing at the time of writing in Europe and elsewhere, where a considerable number of users are still out of reach of high-speed (broadband) terrestrial communication infrastructure, in that they notably lack an efficient access to the Internet, and a broadband access in particular. In a way similar to the United States (U.S.) National Broadband Plan (as advertised on www.broadband.gov, at the time of writing), European Union (EU) regulators and authorities as well as several national governments have started issuing directives to support the deployment of new broadband infrastructure.

The prior art includes documents US 2006/0050736, which relates to a satellite route installed to augment the capacity of a terrestrial data communication route, and US 6,591,084, which relates to a data transfer system including a wireless access unit utilized to provide access to satellite-transferred data.

### [Summary]

In view of the above-mentioned need, an objective of the invention is notably, but not limited to, enabling the interconnection of disconnected villages, rural areas, or small municipalities (or the like) to digital subscriber line (DSL) (or any last-mile technology, the invention being not limited to a DSL-based last-mile) and fiber backbone (or any backbone network technology, the invention being not limited to a fiber backbone) by means of a cost effective and simple satellite-based solution. To meet or at least partially meet this objective, systems, communication devices, methods, and computer programs are defined in the independent claims. Advantageous embodiments are defined in the dependent claims.

In one embodiment, a communication system includes a first communication device, a second communication device and a satellite. The first communication device, here referred to as backbone-side transceiving device, is connected to a terrestrial backbone. The second communication device, here referred to as remote transceiving device, is connected to a set of subscriber communication devices of a plurality of subscribers. The satellite includes means to transmit and receive information to and from the backbone-side transceiving device respectively and to and from the remote transceiving device respectively. The communication system provides data transfer between the terrestrial backbone and the set of subscriber communication devices through the backbone-side transceiving device, the satellite, and the remote transceiving device. The backbone-side transceiving device is configured for enforcing rules, on a per subscriber basis, on the traffic at the backbone-side transceiving device. The remote transceiving device is configured for enforcing rules, on a per subscriber basis, on the traffic at the remote transceiving device.

By configuring the backbone-side transceiving device and the remote transceiving device to enforce rules on a per-subscriber basis, the communication system enables to provide an end-to-end management of the data transfer wherein the management is performed at the level of the subscriber. The enforcement of rules with such a granularity at the subscriber level notably enables to set up measures to ensure a fair use of the available communication resources (in terms of bandwidth for instance) among the subscribers sharing the same connection point (namely, the remote transceiving device) towards the satellite and, beyond, towards the terrestrial backbone. In that respect, the communication system enables in particular to set up measures to ensure an efficient and fair management of the sub-distribution communication architecture that includes the remote transceiving device, any aggregation device (for instance for multiplexing and demultiplexing the communications from and to the different subscriber premises), and the communication links towards the subscribers who share the same satellite point of access. The satellite point of access on the subscribers' side of the sub-distribution architecture is formed by the remote transceiving device, which may include a satellite modem.

Subscribers may be private end users, enterprises, or other types of end users. Each subscriber may have a plurality of piece of communication equipments or subscriber communication devices, but typically there is one point of attachment to the network per subscriber (for instance one DSL modem). The subscribers need an access to the terrestrial backbone for data transfer. In one particular example, it may be said that the subscribers need a DSL connectivity (although the invention is not limited to providing DSL connectivity). Subscribers are typically geographically dispersed. In one embodiment, the subscribers' premises including the subscriber communication devices with which data transfer is required are in a geographical location which is isolated in the sense that no communication infrastructure or a limited communication infrastructure is arranged to provide to them an efficient network access (such as broadband network access) to the terrestrial backbone. In one particular example, it may be said that the subscribers' premises are too far from the point of access of the backbone network to have a terrestrial DSL access. The backbone-side transceiving device may include a satellite modem to transmit and receive data to and from the satellite respectively. The backbone-side transceiving device is connected to the terrestrial backbone for instance via the communication infrastructure of an Internet service provider (ISP).

The remote transceiving device may be connected to the set of subscriber communication devices of a plurality of subscribers for instance through a digital subscriber line access multiplexer (DSLAM) or any type of aggregation point and through any type of last mile communication links such as the wires of a local telephone network (e.g., conventional twisted pair cabling), power lines, TV coaxial cables, wireless links, etc.

The data transfer can include the transfer of any type of content. The content could for instance be transported into messages or packets, such as IP packets. Voice over IP and television over IP (IPTV) are particular examples of contents that may be transported in one embodiment of the system of the invention. The data transfer is bidirectional, i.e. from the terrestrial backbone to the subscriber communication devices (i.e., downstream) and vice versa (i.e., upstream). The rules enforced at the backbone-side transceiving device and at the remote transceiving device may differ for the same subscriber depending on the direction of transfer. The rules may relate to, but are not limited to, queuing and scheduling packets or constraining the traffic belonging to different subscribers in a different manner. In one embodiment, the rules enforced at the backbone-side transceiving device and at the remote transceiving device are individually set, i.e., set per subscriber (at the subscriber level), but are set in a way that the global effect of the rules on the traffic leads to a fair use of the available communication resources by the subscribers sharing the same access towards the terrestrial backbone.

In one embodiment, the communication system is such that each subscriber is assigned a unique identifier (such as for instance an IP address, as mentioned below) and the traffic associated with the subscriber, i.e. with the subscriber communication device(s) of the subscriber, is also identified by the unique identifier (for instance by tagging the packets using a unique identifier in a particular field of the packets).

In this embodiment, the backbone-side transceiving device and the remote transceiving device are each configured to use the unique identifier identifying the traffic to enforce rules on a per subscriber basis. The backbone-side transceiving device and the remote transceiving device are configured to inspect the unique identifier of each incoming packets to apply different rules (or, in other words, policies) depending on the identifier. For instance, the packets of a subscriber having already transferred more than a particular volume of data over a time period may be placed in a low-priority queue to favour the packets of subscribers having not yet reached a particular volume of transferred data (to lead to a fair use of the resources).

The unique identifier may be any type of identifier. The identifier may for instance be formed by the concatenation of an identifier of the DSLAM and the DSLAM port of the line leading to the subscriber's premises and therefore to the subscriber communication device(s).

In one embodiment, the communication system is such that a subscriber communication device is identified by an IP address and the traffic associated with the subscriber communication device is also identified by the IP address. In this embodiment, the backbone-side transceiving device and the remote transceiving device are configured to use the IP address identifying the traffic to enforce rules on a per subscriber basis.

The subscriber communication device to which the IP address is associated may be the point of attachment of the subscriber to the network, for instance a DSL modem.

In one embodiment, the communication system is such that broadband access between the terrestrial backbone and the set of subscriber communication devices is provided only through the backbone-side transceiving device, the satellite, and the remote transceiving device.

In one embodiment, the communication system is such that the remote transceiving device includes or is connected to at least one aggregation node configured for aggregating the communications from at least some the subscriber communication devices of the set of subscriber communication devices. The aggregation node may be a DSLAM. The DSLAM may be integrally formed with the remote transceiving device or may be separate from the remote transceiving device.

In one embodiment, a method is carried out by a communication system including a backbone-side transceiving device, connected to a terrestrial backbone, a remote transceiving device, connected to a set of subscriber communication devices, and a satellite including means to transmit and receive information to and from the backbone-side transceiving device respectively and to and from the remote transceiving device respectively. The method includes (a) providing data transfer between the terrestrial backbone and the set of subscriber communication devices through the backbone-side transceiving device, the satellite, and the remote transceiving device; (b) enforcing, by the backbone-side transceiving device, rules, on a per subscriber basis, on the traffic at the backbone-side transceiving device; and (c) enforcing, by the remote transceiving device, rules, on a per subscriber basis, on the traffic at the remote transceiving device.

### [Brief description of the drawings]

Embodiments of the present invention shall now be described, in conjunction with the appended figures, in which:
Fig. 1 schematically illustrates a system in one embodiment of the invention;
Fig. 2 schematically illustrates a system in one embodiment of the invention, additionally showing an aggregation point or DSLAM;
Fig. 3 schematically illustrates a remote transceiving device in one embodiment of the invention; and
Fig. 4 schematically illustrates a backbone-side transceiving device in one embodiment of the invention.

### [Description of some embodiments]

The present invention shall now be described in conjunction with specific embodiments. These specific embodiments serve to provide the skilled person with a better understanding, but are not intended to in any way restrict the scope of the invention, which is defined by the appended claims.

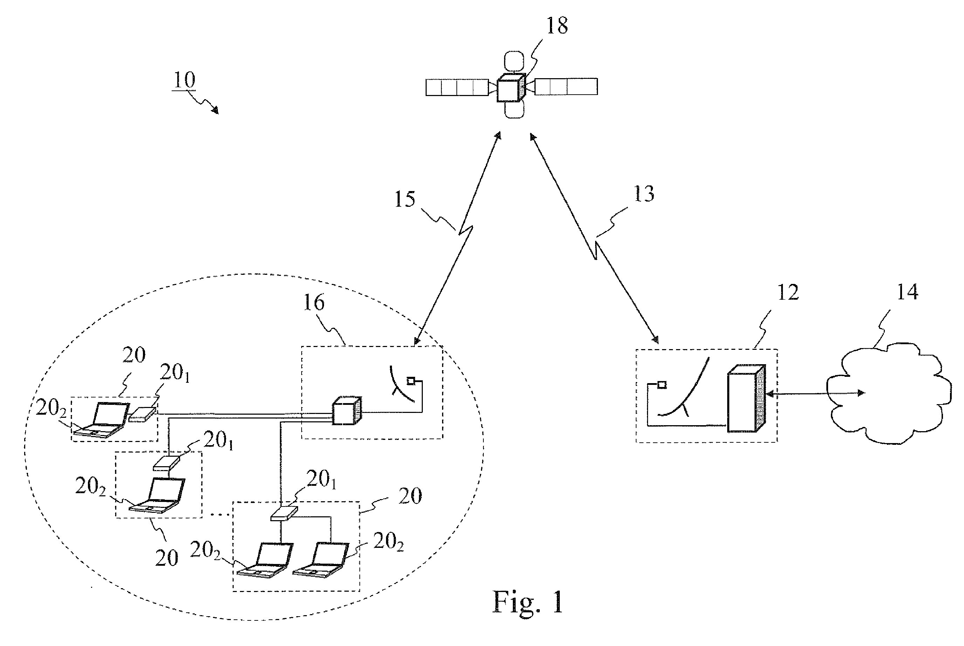

Fig. 1 schematically illustrates a communication system 10 in one embodiment of the invention. In particular, a terrestrial backbone 14 is illustrated at the right-hand side of Fig. 1. The terrestrial backbone 14 may be the internet. The backbone-side transceiving device 12 is connected to the terrestrial backbone 14. The bidirectional arrow between the backbone-side transceiving device 12 and the illustrated cloud representing the terrestrial backbone 14 in Fig. 1 shows the connection between the backbone-side transceiving device 12 and the terrestrial backbone 14. This connection need not be direct and may for instance transit through the infrastructure of an ISP.

As shown in Fig. 1, the backbone-side transceiving device 12 may include more than one piece of equipment connected together to form what is here referred to as a device. For instance, the backbone-side transceiving device 12 may include, but is not limited to, an antenna, a satellite modem and wiring between the antenna and the satellite modem. The backbone-side transceiving device 12 is capable of exchanging information with the satellite 18 over the link 13 and of enforcing rules, as explained below.

The satellite 18 may be any type of satellite, such as for instance a geostationary satellite (GEO), a satellite on a low earth orbit (LEO), or a satellite on a medium earth orbit (MEO). The satellite 18 may use any frequencies such as for instance the Ku or Ka band. The invention is not limited by the use of a particular frequency or particular frequencies. The satellite 18 is capable for exchanging data with the remote transceiving device 16 over the link 15 and with the backbone-side transceiving device 12 over the link 13.

The remote transceiving device 16 may include more than one piece of equipment connected together to form what is here referred to as a device. As illustrated in Fig. 1, the remote transceiving device 16 may include, but is not limited to, an antenna, a satellite modem and wiring between them. The remote transceiving device 16 may therefore be constituted by a group of hardware equipments and software applications arranged together in a housing or shelter. The remote transceiving device 16 may in particular be included in a street cabinet or, in other words, outdoor cabinet. Some components of the remote transceiving device 16, such as an antenna, may be arranged on the roof of a building whereas other components may be arranged in a cabinet located on the ground. If some components of the remote transceiving device 16 are arranged on the roof of a building, the building need not be the building of one of the subscribers, but may be so. In an example, the building may include apartments wherein some of the subscribers or all of them are located. The remote transceiving device 16 may include, but is not limited to, a satellite modem, a DSLAM, a power supply, one or more batteries, and a rack infrastructure to support these elements.

The remote transceiving device 16 is connected, through any type of connection such as for instance the wires of a local telephone network in the form of conventional twisted pair cabling, power lines, TV coaxial cables, wireless links and any type of technology such as for instance WiFi, HyperLAN, WiMax technology, etc., to a plurality of subscriber communication devices 20 belonging to a plurality of subscribers, i.e. more than one subscriber. In Fig. 1, the premises of three subscribers are schematically illustrated by three dotted squares each labelled with reference 20. There may however be more than three subscribers as illustrated by the ellipsis shown between the second dotted square and the third dotted square in Fig. 1. In each of the two first illustrated dotted squares corresponding to subscriber's premises, one computer 20₂, which may be any type of electronic device, is shown as being connected to a DSL modem 20₁ for exchanging data with the remote transceiving device 16. In the third illustrated dotted square, two computers 20₂, which may likewise be any type of electronic devices, are connected to a DSL modem 20₁. The invention is not limited by the number of computers 20₂ or network equipments 20₂ of any type served by a DSL modem 20₁. The DSL modem 20₁ acts as point of attachment to the network to communicate, i.e. to exchange information, with the remote transceiving device 16.

Each group 20 of subscriber communication devices is associated with a unique identifier, such as an IP address, and the packets originating from the subscriber's premises 20 are marked with a specific identifier enabling the remote transceiving device 16 and the backbone-side transceiving device 12 to identify to which subscriber a packet is associated. The packets may be marked with a particular identifier in a particular field, such as a reserved field for that purpose. The identifier may in operation be inserted in the packets at any location where it is still possible to discriminate between the packets from the different subscribers. The same type of mechanism for marking packets is also applied to packets travelling in the other direction, i.e. from the terrestrial backbone 14.

When a particular packet associated with a subscriber reaches the remote transceiving device 16, the remote transceiving device 16 inspects the packet and determines the identifier attached to the packet. Accordingly, the subscriber is determined and the rules associated with the subscriber are retrieved. The rules associated with the subscriber are then applied to the packet accordingly. For instance, a particular type of scheduling or queuing may be applied to the packet. In one embodiment, the packets are subject to shaping, i.e. an additional delay is imposed on certain packets in such a manner that they conform to the data rate limitations associated with particular subscribers at one point in time. The overall aim may be that the available communication resources are used in a fair manner by the subscribers sharing, for forward and return communications, the remote transceiving device 16 and, more generally, the other elements of the architecture, including notably the backbone-side transceiving device 12. How this may for instance be achieved will be apparent from Table 1 below.

An advantage of the communication system 10 illustrated in Fig. 1 is that a single antenna at the remote transceiving device 16 is sufficient. There is no need for one satellite dish (e.g., a parabolic antenna) per subscriber. The invention therefore reduces the adverse visual effects on the environment that the presence of many satellite dishes operated by each subscriber may induce.

A further advantage of the communication system 10 illustrated in Fig. 1 is that it is not necessary to make huge investments to connect the subscribers to the terrestrial backbone 14. Namely, for instance, the remote transceiving device 16 may be installed in such a manner that it connects to existing telephone lines leading to the subscribers' premises. Therefore, the addition of the remote transceiving device 16 may be sufficient to implement the communication system 10, provided that a backbone-side transceiving device 12 already exists for communicating with the satellite 18.

The rules enforced by the remote transceiving device 16 and the backbone-side transceiving device 12 may include many different rules, taking for instance into account at least one of following elements. The rules may take into account a bandwidth assigned to the downstream traffic of a particular subscriber, a bandwidth assigned to the upstream traffic of a particular subscriber, the consumed volume of downstream traffic associated with a particular subscriber per unit of time, such as for instance per month, the consumed volume of upstream traffic associated with a particular subscriber per unit of time, such as for instance per month, the quality of service (QoS) assigned to the downstream traffic of a particular subscriber, the QoS assigned to the upstream traffic of a particular subscriber, etc. The rules may take into account the bandwidth assigned to the downstream traffic of a particular subscriber, the consumed volume of downstream traffic associated with a particular subscriber per unit of time and the current congestion level at at least one of the remote transceiving device 16 and the backbone-side transceiving device 12, to ensure a fair use of the available downstream communication bandwidth. The rules may take into account the bandwidth assigned to the upstream traffic of a particular subscriber, the consumed volume of upstream traffic associated with a particular subscriber per unit of time and the current congestion level at at least one of the remote transceiving device 16 and the backbone-side transceiving device 12, to ensure a fair use of the available upstream communication bandwidth.

In one embodiment, some rules may be enforced at both the remote transceiving device 16 and the backbone-side transceiving device 12 only during some time periods or only following some specific events, such as for instance some specific congestion-related events. This enables to limit the enforcement of rules during peak hours at the time where it is known that many subscribers access the terrestrial backbone 14 (i.e. typically during late afternoon until late evening).

The communication system 10 illustrated in Fig. 1 may therefore be viewed as a hybrid satellite-terrestrial solution with a seamless satellite backbone component (between the remote transceiving device 16 and the backbone-side transceiving device 12 through communication links 13, 15, thus providing access to the terrestrial backbone 14) and a traditional terrestrial access line (from the remote transceiving device 16 to the subscriber communication devices 20). In particular, the communication system 10 may integrate a DSLAM, which may be a standard DSLAM, or any type of broadband access aggregation node (the invention is neither limited to the use of a DSLAM nor to providing broadband access), with a satellite terminal/hub system providing link aggregation and optimization, individual traffic prioritization, and backbone connectivity. The solution is independent of the last mile interconnectivity (e.g., copper) in the sense that the solution is compatible with and able to work as well on coaxial based networks (e.g. cable TV) and wireless networks. The end user modem 20₁ may be physically and logically connected through the DSLAM or broadband access aggregation node with a tailored IP layer with natively integrated shaping, provisioning, quality of service (QoS) management and traffic optimization features, which provides seamless interconnectivity of the end user to carrier's network.

No solution are known in the prior art, which would provide individual QoS support to users located behind a link aggregation point. Known prior art systems are represented by traditional backhauling/trunking solutions in which satellites are simply used as a high speed link to interconnect remote stations to a central unit without any specific intelligence at the backhauling level.

In one example, the rules are applied in a manner illustrated in Table 1.

**Table 1.**

| **Downstream** | | | | | | | | | **Upstream** | |
|---|---|---|---|---|---|---|---|---|---|---|
| | **Consumed volume/ month (MB)** | **Data rate limitation (kbit/s)** | **Congestion Factor (examples) and related downstream speed related (bit/s)** | | | | | | **Consumed volume/ month (MB)** | **Data rate limitation (kbit/s)** |
| | | *(at CF=1)* | **0.1** | **0.5** | **1** | **2** | **4** | | | *(at CF=1)* |
| Step A | < 2500 | 2048 | 2048 | 2048 | 2048 | 1024 | 512 | | < 417 | 256 |
| Step B | < 3300 | 1536 | 2048 | 2048 | 1536 | 768 | 384 | | < 550 | 208 |
| Step C | < 4100 | 1024 | 2048 | 2048 | 1024 | 512 | 256 | | < 683 | 160 |
| Step D | < 4900 | 512 | 2048 | 1024 | 512 | 256 | 128 | | < 817 | 128 |
| Step E | < 5700 | 256 | 2048 | 512 | 256 | 128 | 64 | | < 950 | 80 |
| Step F | < 9000 | 128 | 1280 | 256 | 128 | 64 | 32 | | > 1500 | 32 |
| Step G | > 9000 | 64 | 640 | 128 | 64 | 32 | 16 | | > 1500 | 16 |
| Step H | | | - | - | - | - | - | | | |

Namely, the volume consumed by a particular subscriber is recorded by the remote transceiving device 16 and/or by the backbone-side transceiving device 12. Depending on the consumed volume (e.g., in megabytes (MB)) over a given time period (such as a month), a nominal data rate limitation (kbit/s) is provided (the nominal data rate limitation corresponds to a congestion factor CF equal to 1). For instance, if a subscriber has consumed more than 2500 MB, its nominal data rate limitation may be limited to 1536 kbit/s. This means that if the congestion factor CF is 1 at one point in time, the peak data rate limitation for this particular subscriber will then be limited to 1536 kbit/s. If a subscriber has consumed more than 3300 MB, its nominal peak data rate limitation may be limited to 1024 kbit/s, etc.

Still referring to the example illustrated by Table 1, if the congestion is high at one point in time (e.g., the congestion factor CF being equal to 2 or 4), the data rate limitation may be more severe. On the other hand, if the congestion is low at one point in time (the congestion factor being equal to 0.1 or 0.5), the data rate limitation may be less severe, or no data rate limitation compared to the nominal case may be applied, if the subscriber has consumed more than 2500 MB (i.e., in the first step "step B"). The skilled person will understand how rules may be applied in view of the particular example of Table 1. The example is not however intended to limit the invention, and other types of rules may be applied. The congestion factor may be any parameter representing the level of congestion in the network.

In one embodiment, the volume of traffic consumed by a particular subscriber is recorded over a time period, here referred to as traffic period. The volume of traffic consumed by a particular subscriber is reset at the end of the traffic period. In one embodiment, the start of the traffic period is different depending on the subscriber. The start of a traffic period of each subscriber may be calculated based on a unique identifier associated with the subscriber using a mathematical function. This allows spreading the traffic resets of the subscribers uniformly or substantially uniformly over time. In one embodiment, the traffic period is one month. In one embodiment, the traffic periods of the subscribers do not necessarily follow the calendar month.

In one embodiment, enforcing rules on a per-subscriber basis includes recording the volume of traffic consumed by a particular subscriber and imposing a delay (which may for instance be a time delay having a value of 0 ms, 1 ms, 2 ms, etc.) on the packets depending on the recorded consumed volume at the time a packet associated with the subscriber is received.

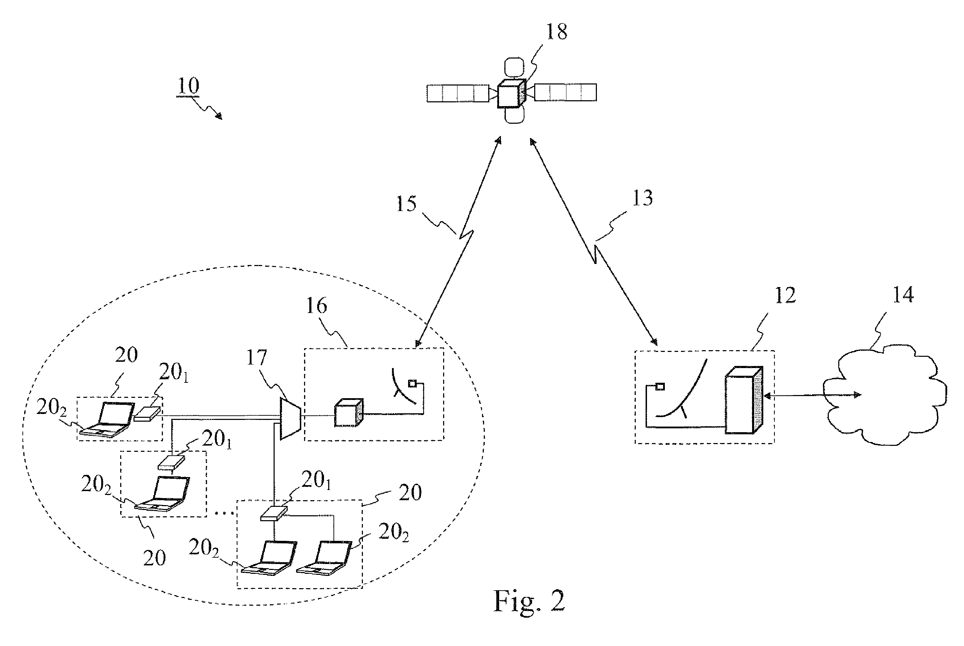

Fig. 2 schematically illustrates a communication system 10 in one embodiment of the invention, which differs from the communication system 10 illustrated in Fig. 1 in that an aggregation point 17 or DSLAM 17 is additionally depicted. The aggregation point 17 or DSLAM 17 may be formed separately from the remote transceiving device 16 (as illustrated in Fig. 2) or may be integrally formed with the remote transceiving device 16 (not illustrated in Fig. 2).

In one embodiment, there is more than one aggregation point 17 or DSLAM 17 connected to one remote transceiving device 16 (not illustrated in Fig. 2).

The DSLAM 17 may be a conventional DSLAM (i.e., not specially adapted to the presence of the satellite 18 between the remote transceiving device 16 and the backbone-side transceiving device 12). Therefore, if, at one point in time, investment is made to connect the subscriber communication devices 20 illustrated in Fig. 2 to the terrestrial backbone 14 directly using a terrestrial link, the DSLAM 17 may be reused for that purpose. This reduces the costs of the system 10, since the DSLAM 17 may be used over a longer period.

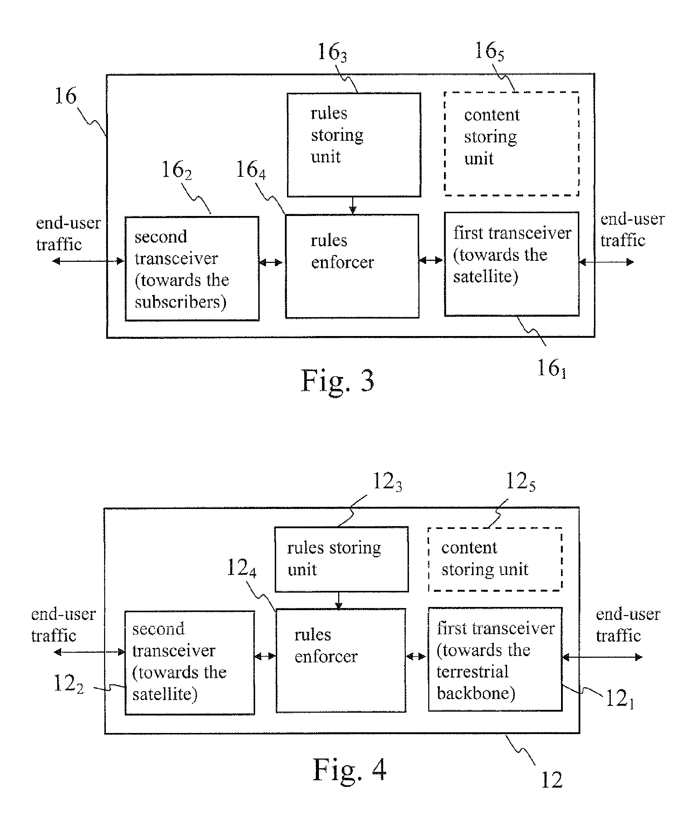

Fig. 3 schematically illustrates a communication device 16, referred to, as mentioned above, as a remote transceiving device 16. The remote transceiving device 16 is configured for relaying traffic between a satellite 18 and a set of subscriber communication devices 20 of a plurality of subscribers. The remote transceiving device 16 includes a first transceiver 16₁, which is labelled in Fig. 3 as "first transceiver (towards the satellite)" and which is configured to transmit and receive subscriber traffic to and from the satellite 18 respectively. The remote transceiving device 16 also includes a second transceiver 16₂, which is labelled in Fig. 3 as "second transceiver (towards the subscribers)" and which is configured to transmit and receive subscriber traffic to and from the subscriber communication devices 20 respectively. The remote transceiving device 16 also includes a rules storing unit 16₃, which is configured to store rules to be enforced on a per subscriber basis. The remote transceiving device 16 also includes a rules enforcer 16₄, which is configured to enforce the rules stored on the rules storing unit 16₃ on the traffic at the remote transceiving device 16 on a per subscriber basis. Optionally, the remote transceiving device 16 may further include a content storing unit 16₅ (represented by a dotted box in Fig. 3). The content storing unit 16₅ may be used for instance for storing a movie, or any type of content, requested repeatedly by subscribers. This enables sparing the communication resources between the remote transceiving device 16 and the terrestrial backbone 14.

Fig. 4 schematically illustrates a communication device 12, referred to, as mentioned above, as a backbone-side transceiving device 12, which is configured for relaying information between a satellite 18 and a terrestrial backbone 14. The backbone-side transceiving device 12 includes a first transceiver 12₁, which is labelled in Fig. 4 as "first transceiver (towards the terrestrial backbone)" and which is configured to transmit and receive subscriber traffic to and from the terrestrial backbone 14 respectively. The backbone-side transceiving device 12 further includes a second receiver 12₂, which is labelled in Fig. 4 as "second transceiver (towards the satellite)", and which is configured to transmit and receive subscriber traffic to and from the satellite 18 respectively. The backbone-side transceiving device 12 also includes a rules storing unit 12₃, which is configured to store rules to be enforced on a per subscriber basis. The backbone-side transceiving device 12 also includes a rules enforcer 12₄, which is configured to enforce the rules stored on the rule storing unit 12₃ on the traffic at the backbone-side transceiving device 12 on a per subscriber basis. Optionally, the backbone-side transceiving device 12 may further include a content storing unit 12₅ (represented by a dotted box in Fig. 4). Similarly as for the content storing unit 16₅, the content storing unit 12₅ may be used for instance for storing a movie, or any type of content, requested repeatedly by subscribers. This enables sparing the communication resources between the between the backbone-side transceiving device 12 and the terrestrial backbone 14.

In one embodiment of the invention, the communication system 10 provides seamless satellite-based interconnection between:
- a selected street cabinet (hosting the remote transceiving device 16) in a village, rural area, or small municipality (or the like), and
- the high-speed terrestrial backbone 14.

The street cabinet, or outdoor cabinet (hosting the remote transceiving device 16), may be equipped with an ad-hoc terminal (with a satellite modem, client software (SW), and a DSLAM or aggregation node equipment) able to fulfil the following requirements:
- to provide DSLAM functionalities or, more generally, broadband access aggregation functionalities. In one embodiment, the maximum number of concurrent end users (i.e., subscribers) is limited by the number of physical ports on the DSLAM hardware or on the hardware of the aggregation node;
- to provide individual user QoS management, traffic prioritization and shaping as well as satellite link optimization (i.e., client);
- to exchange data between the subscriber communication devices 20 (customer premises equipments) and a hub (backbone-side transceiving device 12) by means of a satellite link 13, 18, 15.

Such functionalities may be provided indifferently either by a fully featured "satellite-powered DSLAM" or by a set of equipments mutually interconnected to provide such functionalities. In one embodiment, N (N>1) DSLAMs (or any node which aggregates broadband traffic) may be connected to the same satellite terminal (remote transceiving device 16) depending on bandwidth requirements and network configuration.

On the hub side (i.e. on the backbone-side transceiving device 12), the communication system 10 may be configured to be able to fulfil the following requirements:
- to exchange data between the hub and the remote transceiving device 16 by means of a satellite link 13, 18, 15;
- to provide hub functionalities: radio resource management as well as terminal provisioning; and
- to provide traffic acceleration, individual user QoS management, traffic prioritization and shaping, as well as satellite link optimization on a per-subscriber level.

In one embodiment, the overall provisioning system and user management may take place at the IP layer. In particular, a distinct pool of IP addresses may be allocated per DSLAM, or per broadband access aggregation node 17, per ISP depending on the number of physical ports available at the DSLAM or aggregation node 17. Each end user (i.e., subscriber), who may be uniquely identified within the network by means of the couple { DSLAM_ID, Port Number }, or { aggregation_node_ID, Port Number }, may be assigned an IP address that is used by the hub to address the user and enforce a service level agreement (SLA). The SLA may consist of a set of rules such as forward/return peak speed, fair usage policy (FUP) enforced between the client (subscriber side) and the hub (network side) in order to ensure adequate individual QoS support.

An application of the above-described embodiment of the invention is to provide broadband connectivity through the remote transceiving device 16 (e.g. street cabinets DSLAMs, cable TV head ends, multi-dwelling units), to subscribers who are far from the terrestrial backbone 14 and, because of lack of economical sustainability, no dedicated backbone has been built to reach them. Furthermore, these subscribers may not intend to acquire an individual satellite terminal, due to the satellite terminal costs and installation complexity.

In one embodiment, broadband implies having a download data transfer rates equal or faster than 256 kbit/s. In one embodiment, broadband implies having a download data transfer rates equal or faster than 512 kbit/s. In one embodiment, broadband implies having a download data transfer rates equal or faster than 1 Mbit/s. In one embodiment, broadband implies having a download data transfer rates equal or faster than 2 Mbit/s. In one embodiment, broadband access for a subscriber communication device means that at least one of the following applies: (i) a data transfer rate equal or faster than 256 kbit/s can only be provided through the backbone-side transceiving device 12, the satellite 18, and the remote transceiving device 16; (ii) a data transfer rate equal or faster than 512 kbit/s can only be provided through the backbone-side transceiving device 12, the satellite 18, and the remote transceiving device 16; (iii) a data transfer rate equal or faster than 1 Mbit/s can only be provided through the backbone-side transceiving device 12, the satellite 18, and the remote transceiving device 16; and (iv) a data transfer rate equal or faster than 2 Mbit/s can only be provided through the backbone-side transceiving device 12, the satellite 18, and the remote transceiving device 16. These are possible definitions of broadband and broadband access, but the embodiments of the invention involving a broadband access are not limited to these definitions.

In one embodiment, the setting of the rules to be enforced on the remote transceiving device 16 is as follows. The system 10 may include or provide means for setting, on the remote transceiving device 16, rules to be enforced by the remote transceiving device 16, wherein setting is controlled from the terrestrial backbone 14. This enables to update the rules on the remote transceiving device 16 without the need for physically having to intervene on the remote transceiving device 16. This also enables the activation or deactivation of a subscriber's account to access the communication system 10, including defining the access rights and privileges of certain subscribers, etc.

In one embodiment, the provided means for setting, on the remote transceiving device 16, rules to be enforced by the remote transceiving device 16, wherein setting is controlled from the terrestrial backbone 14, are based on the Internet Protocol (IP).

In one embodiment, the setting of the rules to be enforced on the backbone-side transceiving device 12 is implemented in a similar manner as described above in relation to the remote transceiving device 16.

The physical entities according to the invention and/or its embodiments, including the backbone-side transceiving device 12, the remote transceiving device 16, the subscriber communication devices 20, the first transceivers 16₁, 12₁, the second transceivers 16₂, 12₂, the rules storing units 16₃, 12₃, the rules enforcers 16₄, 12₄ and the content storing unit 16₅, 12₅ may comprise or store computer programs including instructions such that, when the computer programs are executed on the physical entities, steps, procedures and functions of these units are carried out according to embodiments of the invention. The invention also relates to such computer programs for carrying out the function of the units, and to any computer-readable medium storing the computer programs for carrying out methods according to the invention.

Where the terms "backbone-side transceiving device", "remote transceiving device", "subscriber communication device", "first transceiver", "second transceiver", "rules storing unit", "rules enforcer", "content storing unit", etc. are used in the present document, no restriction is made regarding how distributed these elements may be and regarding how gathered these elements may be. That is, their constituent elements may be distributed in different software or hardware components or devices for bringing about the intended function. A plurality of distinct elements may also be gathered for providing the intended functionalities.

Any one of the above-referred units (i.e., "backbone-side transceiving device", "remote transceiving device", "subscriber communication device", "first transceiver", "second transceiver", "rules storing unit", "rules enforcer", "content storing unit", etc.) may be implemented in hardware, software, field-programmable gate array (FPGA), application-specific integrated circuit (ASICs), firmware or the like.

Although the present invention has been described on the basis of detailed examples, the detailed examples only serve to provide the skilled person with a better understanding, and are not intended to limit the scope of the invention. The scope of the invention is much rather defined by the appended claims.

## Claims

1. Communication system (10) including
a first communication device (12), here referred to as backbone-side transceiving device (12), connected to a terrestrial backbone (14);
a second communication device (16), here referred to as remote transceiving device (16), connected to a set of subscriber communication devices (20) of a plurality of subscribers; and
a satellite (18) including means to transmit and receive information to and from the backbone-side transceiving device (12) respectively and to and from the remote transceiving device (16) respectively;
wherein
the communication system (10) provides data transfer between the terrestrial backbone (14) and the set of subscriber communication devices (20) through the backbone-side transceiving device (12), the satellite (18), and the remote transceiving device (16);
the backbone-side transceiving device (12) is configured for enforcing rules, on a per subscriber basis, on the traffic at the backbone-side transceiving device (12); and
the remote transceiving device (16) is configured for enforcing rules, on a per subscriber basis, on the traffic at the remote transceiving device (16).

2. System (10) of claim 1, wherein
a subscriber communication device (20) is identified by a unique identifier and the traffic associated with the subscriber communication device (20) is also identified by the unique identifier; and
the backbone-side transceiving device (12) and the remote transceiving device (16) are configured to use the unique identifier identifying the traffic to enforce rules on a per subscriber basis.

3. System (10) of claim 1 or 2, wherein broadband access between the terrestrial backbone (14) and the set of subscriber communication devices (20) is provided only through the backbone-side transceiving device (12), the satellite (18), and the remote transceiving device (16).

4. System (10) of claim 3, wherein broadband access for a subscriber communication device (20) means that at least one of the following applies:
a data transfer rate equal or faster than 256 kbit/s can only be provided through the backbone-side transceiving device (12), the satellite (18), and the remote transceiving device (16);
a data transfer rate equal or faster than 512 kbit/s can only be provided through the backbone-side transceiving device (12), the satellite (18), and the remote transceiving device (16);
a data transfer rate equal or faster than 1 Mbit/s can only be provided through the backbone-side transceiving device (12), the satellite (18), and the remote transceiving device (16); and
a data transfer rate equal or faster than 2 Mbit/s can only be provided through the backbone-side transceiving device (12), the satellite (18), and the remote transceiving device (16).

5. System (10) according to any one of the preceding claims, further providing means for setting, on the remote transceiving device (16), rules to be enforced by the remote transceiving device (16), wherein setting is controlled from the terrestrial backbone (14).

6. System (10) of claim 5, wherein the provided means for setting, on the remote transceiving device (16), rules to be enforced by the remote transceiving device (16), wherein setting is controlled from the terrestrial backbone (14), are based on the Internet Protocol (IP).

7. System (10) according to any one of the preceding claims, further providing means for setting, on the backbone-side transceiving device (12), rules to be enforced by the backbone-side transceiving device (12), wherein setting is controlled from the terrestrial backbone (14).

8. System (10) of claim 7, wherein the provided means for setting, on the backbone-side transceiving device (12), rules to be enforced by the backbone-side transceiving device (12), wherein setting is controlled from the terrestrial backbone (14), are based on the Internet Protocol (IP).

9. System (10) according to any one of the preceding claims, wherein the remote transceiving device (16) includes or is connected to at least one aggregation node (17) configured for aggregating the communications from at least some the subscriber communication devices (20) of the set of subscriber communication devices (20).

10. System (10) according to any one of the preceding claims, wherein the rules to be enforced take into account at least one of
the bandwidth assigned to the downstream traffic of a particular subscriber;
the bandwidth assigned to the upstream traffic of a particular subscriber;
the consumed volume of downstream traffic associated with a particular subscriber per unit of time, such as for instance per month;
the consumed volume of upstream traffic associated with a particular subscriber per unit of time, such as for instance per month;
the quality of service (QoS) assigned to the downstream traffic of a particular subscriber;
the quality of service (QoS) assigned to the upstream traffic of a particular subscriber;
the current congestion level in downlink at at least one of the remote transceiving device (16) and the backbone-side transceiving device (12);
the current congestion level in uplink at at least one of the remote transceiving device (16) and the backbone-side transceiving device (12);
the bandwidth assigned to the downstream traffic of a particular subscriber, the consumed volume of downstream traffic associated with a particular subscriber per unit of time and the current congestion level at at least one of the remote transceiving device (16) and the backbone-side transceiving device (12), to ensure a fair use of the available downstream communication bandwidth; and
the bandwidth assigned to the upstream traffic of a particular subscriber and the consumed volume of upstream traffic associated with a particular subscriber per unit of time and the current congestion level at at least one of the remote transceiving device (16) and the backbone-side transceiving device (12), to ensure a fair use of the available upstream communication bandwidth.

11. Communication device (16), here referred to as remote transceiving device (16), configured for relaying traffic between a satellite (18) and a set of subscriber communication devices (20) of a plurality of subscribers, including
a first transceiver (16₁) configured to transmit and receive subscriber traffic to and from the satellite (18) respectively;
a second transceiver (16₂) configured to transmit and receive subscriber traffic to and from the subscriber communication devices (20) respectively;
a rules storing unit (16₃) configured to store rules to be enforced on a per-subscriber basis; and
a rules enforcer (16₄) configured to enforce the rules stored on the rules storing unit (16₃) on the traffic at the remote transceiving device (16) on a per subscriber basis.

12. Communication device (12), here referred to as backbone-side transceiving device (12), configured for relaying information between a satellite (18) and a terrestrial backbone (14), including
a first transceiver (12₁) configured to transmit and receive subscriber traffic to and from the terrestrial backbone (14) respectively;
a second transceiver (12₂) configured to transmit and receive subscriber traffic to and from the satellite (18) respectively;
a rules storing unit (12₃) configured to store rules to be enforced on a per-subscriber basis; and
a rules enforcer (12₄) configured to enforce the rules stored on the rules storing unit (12₃) on the traffic at the backbone-side transceiving device (12) on a per subscriber basis.

13. Method carried out by a communication system (10) including
a first communication device (12), here referred to as backbone-side transceiving device, connected to a terrestrial backbone (14);
a second communication device (16), here referred to as remote transceiving device, connected to a set of subscriber communication devices (20); and
a satellite (18) including means to transmit and receive information to and from the backbone-side transceiving device (12) respectively and to and from the remote transceiving device (16) respectively;
wherein the method includes
providing data transfer between the terrestrial backbone (14) and the set of subscriber communication devices (20) through the backbone-side transceiving device (12), the satellite (18), and the remote transceiving device (16);
enforcing, by the backbone-side transceiving device (12), rules, on a per subscriber basis, on the traffic at the backbone-side transceiving device (12); and
enforcing, by the remote transceiving device (16), rules, on a per subscriber basis, on the traffic at the remote transceiving device (16).

14. Computer program including computer-understandable instructions configured, when executed on a communication device (16), here referred to as remote transceiving device (16), configured for relaying traffic between a satellite (18) and a set of subscriber communication devices (20) of a plurality of subscribers,
to transmit and receive subscriber traffic to and from the satellite (18) respectively;
to transmit and receive subscriber traffic to and from the subscriber communication devices (20) respectively;
to store rules to be enforced on a per-subscriber basis; and
to enforce the rules on the traffic at the remote transceiving device (16) on a per subscriber basis.

15. Computer program including computer-understandable instructions configured, when executed on a communication device (12), here referred to as backbone-side transceiving device (12), configured for relaying information between a satellite (18) and a terrestrial backbone (14),
to transmit and receive subscriber traffic to and from the terrestrial backbone (14) respectively;
to transmit and receive subscriber traffic to and from the satellite (18) respectively;
to store rules to be enforced on a per-subscriber basis; and
to enforce the rules on the traffic at the backbone-side transceiving device (12) on a per subscriber basis.
